Europäisches Patentamt

European Patent Office

Office européen des brevets

(11) Veröffentlichungsnummer: **0 336 017 B1**

## (12) EUROPÄISCHE PATENTSCHRIFT

(45) Veröffentlichungstag der Patentschrift: **09.06.93**

(51) Int. Cl.⁵: **A61C 5/12**

(21) Anmeldenummer: **88121643.6**

(22) Anmeldetag: **24.12.88**

(54) Matrizen-Schnellspanner für Dentalzwecke.

(30) Priorität: **08.04.88 DE 3811753**

(43) Veröffentlichungstag der Anmeldung:
**11.10.89 Patentblatt 89/41**

(45) Bekanntmachung des Hinweises auf die
Patenterteilung:
**09.06.93 Patentblatt 93/23**

(84) Benannte Vertragsstaaten:
**AT BE CH FR GB IT LI NL SE**

(56) Entgegenhaltungen:
**FR-A- 2 467 661**
**US-A- 1 359 665**
**US-A- 2 286 021**
**US-A- 2 521 467**

(73) Patentinhaber: **Hirdes, Rüdiger, Dr. med. dent.**
**Kleinherbeder Strasse 9 a**
**W-5810 Witten(DE)**

(72) Erfinder: **Hirdes, Rüdiger, Dr. med. dent.**
**Kleinherbeder Strasse 9 a**
**W-5810 Witten(DE)**

(74) Vertreter: **Eichelbaum, Lambert, Dipl.-Ing.**
**Krüppeleichen 6**
**W-4350 Recklinghausen (DE)**

**Beschreibung**

Die Erfindung betrifft einen Matrizenspanner für Dentalzwecke mit einer an einem Rahmen schraubverschieblichen Gewindestange, die mit ihrem vorderen Ende einen die Enden eines Matrizenbandes lösbar halternden Kulissenstein entlang dem Rahmen gleitend verschiebt, wobei das Matrizenband in Form einer in ihrer Weite verstellbaren Schlaufe durch einen Führungsschlitz hindurchgreift und wobei die Gewindestange mit ihrem hinteren, mit einem Außengewinde versehenen Ende durch eine Öffnung mit entsprechendem Innengewinde eines am Rahmen gehaltenen Schraubelementes hindurchgeführt und an diesem hinteren Ende mit einem Rändelgriff versehen ist.

Bei einem durch offenkundige Vorbenutzung bekannten Matrizenspanner dieser Art ist der Führungsschlitz zum Durchgriff des zu einer Schlaufe in ihrer Weite verstellbaren Matrizenbandes am vorderen Ende des Rahmens angeordnet, während zwischen dem vorderen Ende der Gewindestange und dem Kulissenstein die Enden des Matrizenbandes geklemmt werden. Der Kulissenstein weist eine im wesentlichen U-förmige Querschnittsform auf und wird mittels eines Nietes in einem Langloch des Rahmens geführt. Das hintere Ende des Rahmens ist U-förmig gebogen und wird von der Gewindestange in einer Öffnung durchgriffen, wobei das freie, gabelförmig ausgebildete Ende des Rahmens eine Außennut einer Rändelmutter als Schraubelement formschlüssig halternd umgreift. Das hintere Ende der Gewindestange ist mit einem Rändelgriff versehen. Über diesen Rändelgriff kann die Verklemmung und Lösung der freien Enden des Matrizenbandes zwischen dem vorderen Ende der Gewindestange und dem Kulissenstein vorgenommen werden. Mittels der Rändelmutter kann die Gewindestange, damit der Kulissenstein und damit die freien Enden des Matrizenbandes in beide Längsrichtungen des Rahmens verschoben werden. Dabei hält der Zahnarzt mit dem Finger bzw. dem Daumen einer Hand das um einen Zahn gelegte Matrizenband nieder, während er mit der anderen Hand in zeitraubender Schraubarbeit die passende Verengung der Schlaufe des Matrizenbandes herbeiführen muß. Diese Schraubarbeit kann auch nicht dadurch behoben werden, daß das Gewinde der Gewindestange, welches stets als Feingewinde ausgebildet ist, durch ein Gewinde größerer Steigung ersetzt wird, da zum letzten feinen Festziehen des Matrizenbandes um die Konfiguration des zu behandelnden Zahnes in jedem Fall eine Feineinstellung in Form eines Feingewindes erforderlich ist.

Bei einem weiteren bekannten Matrizenspanner der eingangs genannten Art nach Toffelmire besteht der Kulissenstein aus einem quaderförmigen Körper mit einem schrägverlaufenden Schlitz, in welchem die Enden des Matrizenbandes vom vorderen Ende der darin eingreifenden Gewindestange geklemmt werden. Bei diesem Matrizenspanner ist der Kulissenstein mit einer schwalbenschwanzähnlichen Führung an der mit einem entsprechenden Querschnitt ausgebildeten Rahmenstange gleitverschieblich angeordnet. Das vordere Ende des Rahmens ist abgewinkelt und mit insgesamt drei unterschiedlich U-förmigen Führungsschlitzen zum Hindurchführen des Matrizenbandes versehen, welches vor diesen Schlitzen zu einer in ihrer Weite verstellbaren, der konischen Zahnkonfiguration angepaßten konischen Schlaufe geformt ist. In diesem Fall besteht das Matrizenband nicht aus einer Bandware, sondern ist in Einzelfertigung zu einem speziellen Matrizenband ausgebildet, welches aufgrund ihres Zuschnittes bei ihrer Windung zu einer Schlaufe eine konische Form einnimmt. Bei diesem Matrizenspanner ist ein Führungsschlitz sowohl an der Stirnseite als auch an der linken und rechten Seite des vorderen Rahmenendes vorgesehen. Auch dieser Matrizenspanner ist mit dem Nachteil einer zeitraubenden Schraubarbeit zum Verengen und zum Aufweiten des um den zu behandelnden Zahn gelegten Matrizenbandes verbunden.

Der letztbeschriebene Matrizenspanner ist darüberhinaus mit dem Nachteil behaftet, daß zum Umsetzen des Matrizenbandes von der linken auf die rechte Position die Verklemmung zwischen dem Ende der Gewindestange und dem jeweiligen Kulissenstein gelöst, sodann das Band umgesetzt und erneut die Verklemmung hergestellt werden muß. Da hierbei zwangsläufig die Verklemmung zu lösen ist, können beim Umsetzen die geklemmten Enden des Matrizenbandes zwischen den klemmenden Teilen herausgleiten und müssen sodann in zeitraubender Arbeit wieder eingefädelt werden. Dabei sind oftmals Beschädigungen des Matrizenbandes unvermeidlich. Das gleiche gilt selbstverständlich auch beim Einsetzen und Auswechseln des Matrizenbandes. Ferner müssen bei beiden Matrizenspannern zunächst die Kulissensteine in die vordere, die Schlaufe des Matrizenbandes aufweitende Position vorgeschraubt werden. Nachdem das Matrizenband um den zu behandelnden Zahn gelegt worden ist, muß sodann in ebenso zeitraubender Schraubarbeit der betreffende Kulissenstein zur Verengung der Schlaufe des Matrizenbandes zurückgeschraubt werden.

Beides ist nur unter ergonomisch ungünstigen Bedingungen in oder in unmittelbarer Nähe der Mundhöhle des Patienten durchzuführen, da der betreffende Zahnarzt mit den Fingern der einen Hand den Matrizenspanner halten und zugleich das Matrizenband am Zahn niederhalten muß, während er mit dem Zeigefinger und dem Daumen der anderen Hand die Schraubarbeit zum Verengen und Aufweiten der Schlaufe des Matrizenbandes durchführt.

Aus der US-PS 1,359,665 ist ein Matrizenspanner für Dentalzwecke anderer Art bekannt geworden, der im wesentlichen aus einem rohrförmigen Gehäuse und einer darin über einen Stift in einem achsparallelen Schlitz des Gehäuses geführten Kolbenstange besteht, die an ihrem rückwärtigen Ende von einer mit einem Innengewinde des Gehäuses in Eingriff befindlichen Schraube in Richtung auf das andere Ende des Gehäuses verschiebbar ist und die an ihrem vorderen Ende einen Kopf mit einer Schlitzführung aufweist. Durch diese Schlitzführung greifen die beiden Schlaufenenden eines Matrizenbandes hindurch, bevor sie nach ihrem Durchtritt durch einen Schlitz des angrenzenden Gehäuseendes von einer Rändelschraube geklemmt werden. Bei dieser Ausführungsform befindet sich zwar der Führungsschlitz in dem Kopf der Kolbenstange, jedoch muß auch hier in zeitraubender Schraubarbeit die Kolbenstange zur Verengung der Schlaufe des Matrizenbandes mittels der Schraube am rückwärtigen Ende des rohrförmigen Gehäuses eingestellt werden. Ferner ist dies nur unter ergonomisch ungünstigen Bedingungen möglich, wobei die Sicht des Zahnarztes durch die relativ sperrige Rändelschraube zur Klemmung des Matrizenbandes behindert wird.

Von diesem Stand der Technik ausgehend liegt der Erfindung die Aufgabe zugrunde, einen Matrizenspanner der eingangs genannten Art zu schaffen, der bei ergonomisch günstigerer Handhabung die Verengung und Aufweitung der um den zu behandelnden Zahn gelegte Schlaufe des Matrizenbandes im Bruchteil des Zeitraumes der bekannten Matrizenspanner gewährleistet.

Diese Aufgabe wird in Verbindung mit dem eingangs genannten Gattungsbegriff erfindungsgemäß dadurch gelöst, daß das Schraubelement als eine zur Längsachse der Gewindestange kippbare Schnellspannmutter ausgebildet ist, die unter Wirkung einer sie in Klemmlage mit der Gewindestange haltenden Klemmfeder steht, und daß mindestens ein Führungsschlitz für die in ihrer Weite verstellbare Schlaufe des Matrizenbandes am freien Ende des Kulissensteines angeordnet ist. Durch diese Ausbildung entfällt die zeitraubende Schraubarbeit zum Aufweiten bzw. Verengen der Schlaufe des Matrizenbandes, da nunmehr mit einer Bewegung die Schnellspannmutter gekippt und zugleich die Gewindestange durch deren Gewindeöffnung bis zur gewünschten Schlaufenweite durchgeschoben, sodann losgelassen, wodurch die Schnellspannmutter unter Wirkung der Klemmfeder in ihre Klemmlage zurückgekippt wird, während im unmittelbaren Anschluß daran der Zahnarzt am Rändelgriff der Gewindestange durch einen kurzen abschließenden Drehwinkel das Festziehen der Gewindeschlaufe des Matrizenbandes sicherstellt. Dieser gesamte Vorgang dauert lediglich ein bis zwei Sekunden und ist auch deshalb ergonomisch günstiger durchzuführen, weil das Kippen der Gewindemutter und das Durchschieben der Gewindestange in einem Arbeitsvorgang von einer Hand nach dem Handhabungsprinzip einer Injektionsspritze, beispielsweise mit dem Zeigefinger, dem Mittelfinger und dem Daumen einer Hand durchgeführt werden können.

Die Klemmfeder für die Schnellspannmutter stützt sich vorteilhaft mit ihrem einen Ende gegen eine Rastfläche der die Gewindestange konzentrisch umgreifenden Schnellspannmutter und mit ihrem anderen Ende an einem ortsfesten Vorsprung des Rahmens ab. Sie kann entweder als die Gewindestange konzentrisch umgreifende Schrauben- oder Kegelfeder oder auch als Teller- oder Blattfeder ausgebildet sein.

Nach einer vorteilhaften Weiterbildung der Erfindung ist die Schnellspannmutter mit einem ergonomisch günstigen, über die Außenkontur des Rahmens hinausragenden Vorsprung versehen. Der Rahmen weist darüber hinaus in Höhe des Vorsprunges der Schnellspannmutter ein ergonomisch günstig vorspringendes und mit dem vorgenannten Vorsprung der Schnellspannmutter auf eine griffgünstige Lage abgestimmtes, vorspringendes Halteelement auf. Das Halteelement und der Vorsprung der Schnellspannmutter weisen einen abgerundeten Kantenbereich auf und sind in Verbindung mit dem Rändelgriff am hinteren Ende der Gewindestange nach der Art einer Injektionsspritze ausgebildet.

Im Gegensatz zum Stand der Technik sind nunmehr die Führungsschlitze für die in ihrer Weite verstellbare Schlaufe des Matrizenbandes am freien Ende des Kulissensteines - und nicht mehr am Rahmen - angeordnet. Dadurch wird beim Vorschieben der Gewindestange auch der Kulissenstein vorgeschoben und dementsprechend die Schlaufe des aus dem Führungsschlitz herausragenden Matrizenbandes verengt und bei einem Zurückziehen der Gewindestange und damit des Kulissensteines entsprechend aufgeweitet.

Der Einsatzbereich des neuen Matrizenspanners und seine Ergonomie werden dadurch verbessert, daß die Führungsschlitze eine konische, keilförmige oder zylindrische Form aufweisen und an der Ober- und/oder der Unterseite des Kulissensteines mit einem engeren Einsatzschlitz versehen sind. Da das Matrizenband aufgrund seiner Eigenelastizität nach seinem Einsatz in den Führungsschlitz das Bestreben hat, sich zu einer Schlaufe aufzuweiten, legen sich die Seitenflächen dieser Schlaufe sehr eng an die Seitenwände der Führungsschlitze an und können demzufolge nicht mehr aus dem erheblich engeren Einsatzschlitz des Kulissensteines herausgleiten.

3

Nach einer vorteilhafter Weiterbildung der Erfindung ist der Kulissenstein einteilig oder mehrteilig ausgebildet und weist in jedem Fall einen axialsymmetrischen, etwa in axialer Richtung der Längsachse der Gewindestange verlaufenden Längsschlitz zum Einsatz des an dieser Stelle lösbar gehalterten Matrizenbandes auf. Die Enden des Matrizenbandes sind an einem durch sie hindurchgreifenden sowie am Rahmen arretierbaren Dorn in dem Längsschlitz schwenkbar gehaltert bzw. gelagert. Der Dorn ist an einer Seitenwange einer an der Unterseite des Rahmens schwenkbar gelagerten Bodenplatte befestigt, die über eine Rastnase am Rahmen vorübergehend arretierbar ist. Durch diese vorteilhafte Ausbildung kann in ergonomisch einfacher Weise, z.B. eine Zahnarzthelferin, die zusammengelegten Enden eines Matrizenbandes durch den axialsymmetrischen Längsschlitz des Kulissensteines bis zum Anschlag mit der Bodenplatte einführen, sodann die Bodenplatte mit ihrer Seitenwange in Arretierungsstellung einschwenken, wodurch zugleich der Dorn durch beide Enden des Matrizenbandes formschlüssig hindurchgreift und zugleich ein Schwenkgelenk für das Matrizenband zum Umsetzen von einem Führungsschlitz in einen anderen bildet. Denn durch diese Ausbildung braucht im Gegensatz zum Stand der Technik nicht mehr eine Verklemmung gelöst werden, vielmehr braucht lediglich die Schlaufe zum Herausführen aus den Einsatzschlitzen verengt und sodann an dem als Schwenkgelenk fungierenden Dorn aus dem Führungsschlitz herausgeschwenkt und in den Einsatzschlitz eines anderen Führungsschlitzes eingeführt werden. Dieser Vorgang ist in seiner einfachen Handhabung und Schnelligkeit nicht mehr mit dem zeitraubenden "Puzzlespiel" und den dadurch bedingten Beschädigungen des Matrizenspanners beim Stand der Technik vergleichbar.

In vorteilhafter Ausgestaltung der Erfindung weist die Bodenplatte in einem Abstand von der Schwenkachse einen radialen Schlitz auf, durch welchen ein am Rahmen befestigter Niet- oder Schraubbolzen als Schwenkbegrenzung hindurchgreift. Der Kulissenstein weist für den Durchgriff des Dornes ein parallel zur Längsachse der Gewindestange verlaufendes Langloch auf und ist an seinem der Gewindestange zugekehrten Ende mit dieser über eine Kugel formschlüssig verschieblich gekoppelt.

Zum leichten Lösen der Arretierung der Bodenplatte und damit des Dornes sowie als Anschlagbegrenzung für die in den Längsschlitz des Kulissensteines einzuführenden Enden des Matrizenbandes weist die Bodenplatte an der den Dorn haltenden Seitenwange gegenüberliegenden Seite eine über das freie, spitze Ende des Dornes vorspringende und damit den Schlitz an dieser Stelle untergreifende Seitenkante auf, die in arretierter Lage der Bodenplatte die zugeordnete Seitenwand des Rahmens überragt.

Der Kulissenstein ist vorteilhaft zweiteilig ausgebildet und in einem im Querschnitt rohrförmigen Rahmen verschieblich. Zur leichteren Sterilisierbarkeit sowie Handhabbarkeit beim Zusammensetzen besteht der Kulissenstein aus zwei quaderförmigen Teil-Kulissensteinen, die an einem Rahmen mit rechteckigem oder quadratischem Querschnitt geführt sind. Es ist jedoch auch möglich, den Rahmen mit einem Kreisquerschnitt und den Kulissenstein jeweils mit einer halbkreisförmigen Außenkonfiguration zu versehen.

Um die Schlaufe des Matrizenbandes nach beendeter Zahnbehandlung rasch und in ergonomisch einfacher Weise lösen zu können, ist der Kulissenstein entgegen der Kraft einer Spannfeder in eine vordere, die Schlaufe des Matrizenbandes verengende Position vorschiebbar. Diese Spannfeder besteht vorteilhaft aus einer die Gewindestange konzentrisch umgreifenden, zylindrischen Schraubenfeder, die sich mit ihrem einen Ende gegen eine drehfest mit der Gewindestange verbundene Scheibe und mit ihrem anderen Ende gegen einen Vorsprung des Rahmens in dessen Innenraum abstützt. Dadurch kann nach Lösen des Festsitzes des Matrizenbandes durch eine kurze Winkeldrehung am Rändelgriff die Schnellspannmutter gekippt werden, wodurch die Gewindestange unter Wirkung der vorgespannten Spannfeder in seine die Weite der Schlaufe vergrößernde Ausgangsposition unter Mitnahme des Kulissensteines zurückgleitet.

Ein Ausführungsbeispiel der Erfindung ist in den Zeichnungen dargestellt. Dabei zeigen:

Fig. 1          den Längsschnitt durch den neuen Matrizenspanner,

Fig. 2          die Schnittansicht entlang der Linie II-II von Fig. 1,

Fig. 3          die Teil-Draufsicht auf das vordere Ende des Kulissensteines von Fig. 1,

Fig. 4          eine vergrößerte Ansicht des Teilausschnittes IV von Fig. 1 in Klemmlage der Schnellspannmutter,

Fig. 5          die Ansicht von Fig. 4 in gekippter und damit gelöster Lage der Schnellspannmutter,

Fig. 6          die Schnittansicht in Richtung der Linie VI-VI von Fig. 2 bei arretierter Bodenplatte,

Fig. 7          die Ansicht von Fig. 6 bei entriegelter und ausgeschwenkter Bodenplatte,

Fig. 8          die Seitenansicht der Bodenplatte in Richtung des Pfeiles VIII von Fig. 7,

Fig. 9          die Seitenansicht von Fig. 8 in Richtung des Pfeiles IX von Fig. 8,

Fig. 10         die Draufsicht von Fig. 8 und

Fig. 11 bis 14

                unterschiedliche Formen des Führungsschlitzes des Kulissensteines mit engerem Einsatzschlitz.

4

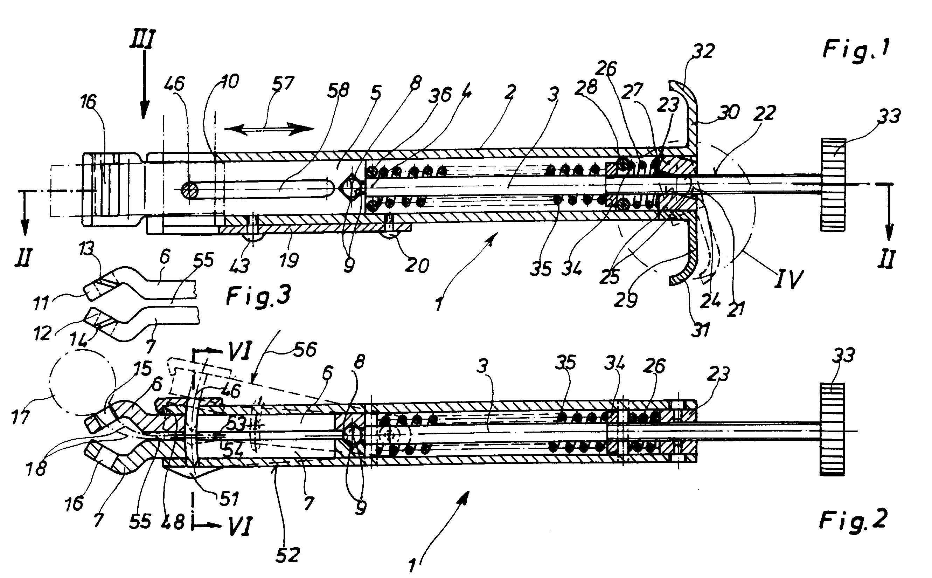

Der Matrizenspanner (1) gemäß den Figuren 1 und 2 besteht im wesentlichen aus einem rohrförmigen Rahmen (2) mit rechteckigem Querschnitt, einer darin schraubverschieblichen Gewindestange (3), die mit ihrem vorderen Ende (4) einen zweiteiligen Kulissenstein (5) entlang dem Rahmen (2) verschiebt. Die beiden Hälften (6, 7) des Kulissensteines (5) sind aus Fig. 2 ersichtlich. Die Gewindestange (3) weist an ihrem vorderen Ende (4) eine Kugel (8) auf, die an zwei diametral gegenüberliegenden Seiten von zwei Ausnehmungen (9) je eines Kulissensteines (6, 7) umgriffen ist. Da der Kulissenstein (5) mit seinen beiden Hälften (6, 7) bis etwa zur Vorderkante (10) des rohrförmigen Rahmens (2) allseitig umgriffen ist, sind die Teil-Kulissensteine (6, 7) mit der Kugel (8) formschlüssig verschieblich gekoppelt. Die Kugel (8) bildet mit den Ausnehmungen (9) der Teil-Kulissensteine (6, 7) ein Kugelgelenk.

An ihren freien Enden (11, 12) sind die Teil-Kulissensteine (6, 7) mit je einem schrägen, relativ engen Einsatzschlitz (13, 14) und mit einem unmittelbar darunterliegenden, größeren Führungsschlitz (15, 16) für die strichpunktiert angedeutete und in ihrer Weite verstellbaren Schlaufe (17) des Matrizenbandes (18) versehen.

Die Unterseite des Rahmens (2) wird im Bereich des Kulissensteines (5) von einer Bodenplatte (19) untergriffen, die über den Schwenkbolzen (20) schwenkbeweglich am Rahmen (2) befestigt ist. Diese Bodenplatte (19) wird noch an anderer Stelle ausführlich beschrieben.

Mit ihrem hinteren Ende (21) greift die Gewindestange (3) mit einem Außengewinde (22) durch die Öffnung (24) einer Schnellspannmutter (23), die mit einem entsprechenden Innengewinde (25) versehen ist. Diese Schnellspannmutter (23) steht unter der Wirkung einer sie in der in Fig. 1 dargestellten Klemmlage mit der Gewindestange (3) haltenden Klemmfeder (26).

Die Klemmfeder (26) stützt sich mit ihrem einen Ende gegen eine Stirnfläche (27) der die Gewindestange (3) konzentrisch umgreifenden Schnellspannmutter (23) und mit ihrem anderen Ende an einem ortsfesten, bügelförmigen Vorsprung (28) ab, der ortsfest am Rahmen (2) befestigt ist.

Im dargestellten Fall ist die Klemmfeder (26) als die Gewindestange (3) konzentrisch umgreifende Schraubenfeder ausgebildet. Es ist jedoch auch möglich, diese Klemmfeder (26) als Kegel-, Teller- oder als Blattfeder auszubilden.

Die Schnellspannmutter (23) ist mit einem ergonomisch günstigen, über die Außenkontur des Rahmens (2) hinausragenden Vorsprung (29) vesehen. In der gleichen Höhe des Vorsprunges (29) der Schnellspannmutter (23) weist der Rahmen (2) ein ähnlich ergonomisch günstig gestaltetes, vorspringendes Halteelement (30) auf. Das Halteelement (30) und der Vorsprung (29) der Schnellspannmutter (23) weisen abgerundete Kantenbereiche (31, 32) auf, die in Verbindung mit dem am hinteren Ende angeordneten Rändelgriff (33) der Gewindestange (3) nach der Art einer Injektionsspritze ausgebildet sind. An der von der Klemmfeder (26) abgewandten Seite befindet sich hinter deren ortsfesten Vorsprung (28) für ihre Abstützung eine drehfest mit der Gewindestange (3) verbundene Scheibe (34), gegen welche sich eine als zylindrische Schraubenfeder ausgebildete und die Gewindestange (3) konzentrisch umgreifende Schraubenfeder abstützt, die mit ihrem anderen Ende von einem bügelförmigen Vorsprung (36) gehalten ist, der ortsfest mit dem Rahmen (2) verbunden ist.

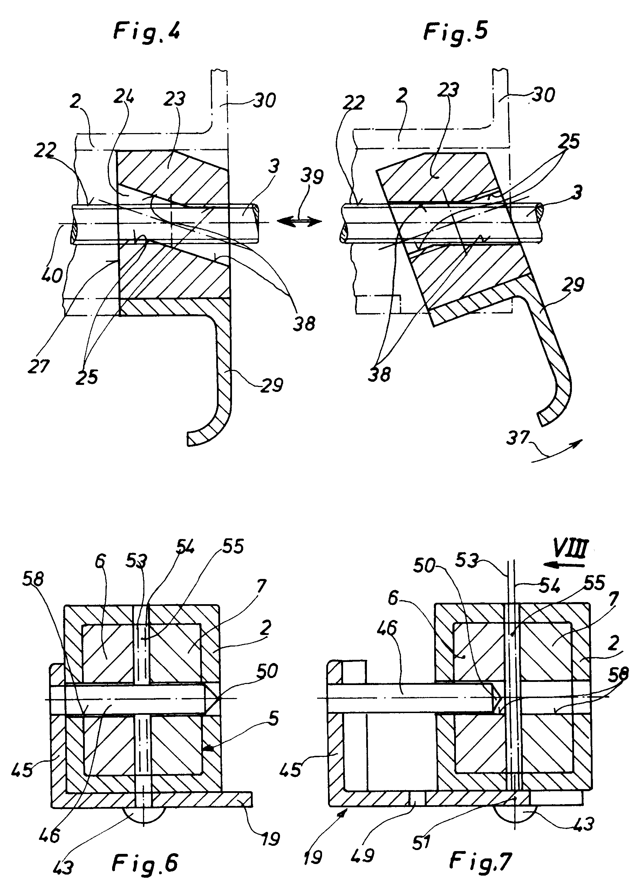

Die Funktion der Schnellspannmutter (23) in Verbindung mit der Gewindestange (3) ist in den Figuren 4 und 5 dargestellt. In der Stellung der Fig. 4 greift das Außengewinde (22) der Gewindestange (3) in das Innengewinde (25) der Schnellspannmutter (23) ein. In dieser Stellung kann über den Rändelgriff (33) die Gewindestange (3) gedreht und damit innerhalb der Schnellspannmutter (23) über die Gewinde (22, 25) schraubverschieblich bewegt werden.

Wird gemäß Fig. 5 die Schnellspannmutter (23) über den ergonomisch günstigen Vorsprung (29) in Richtung des Pfeiles (37) gekippt, gelangt das Innengewinde (25) der Schnellspannmutter (23) außer Eingriff mit dem Außengewinde (22) der Gewindestange (3). Dann liegt das Außengewinde (22) der Gewindestange (3) an gewindelosen Flächen (38) der Schnellspannmutter (23) an, wodurch die Gewindestange (3) rasch in beiden Richtungen des Doppelpfeiles (39) verschoben werden kann. Sobald die Bedienungsperson die Schnellspannmutter (23) losläßt, wird sie unter der Wirkung der Klemmfeder (26) in die in Fig. 4 dargestellte Klemmlage gekippt, wodurch erneut ihr Innengewinde (25) mit dem entsprechenden Außengewinde (22) der Gewindestange (3) in Eingriff gelangt. Hiernach kann die Gewindestange (3) nur noch schraubverschieblich durch Drehung des Rändelgriffes (33) in beiden Richtungen des Doppelpfeiles (39) bewegt werden.

Dabei folgt die Kippbewegung der Schnellspannmutter (23) stets zur Längsachse (40) der Gewindestange (3).

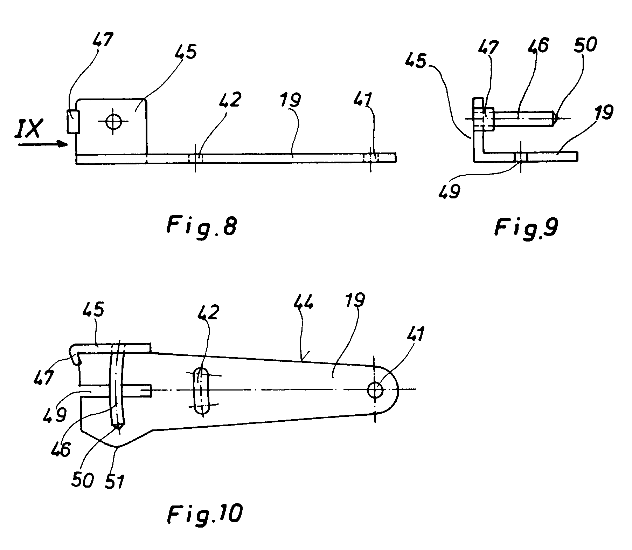

In den Figuren 8 bis 10 ist die aus den Figuren 1 und 2 ersichtliche Bodenplatte (19) in drei Ansichten dargestellt. Sie weist in einem Abstand von der Durchgrifföffnung (41) für die Schwenkachse (20) einen radialen Schlitz (42) auf, durch welchen ein am Rahmen (2) befestigter Niet- oder Schraubbolzen (43) als Schwenkbegrenzung hindurchgreift, so wie es aus Fig. 1 entnommen werden kann.

An ihrer Seitenkante (44) ist die Bodenplatte (19) mit einer etwa senkrecht hochstehenden Seitenwange (45) versehen, in etwa deren Mitte ein Dorn (46) ortsfest angeordnet ist. Die Seitenwange (45) weist eine Rastnase (47) auf, welche gemäß Fig. 2 eine entsprechend ausgebildete Rastfläche (48) an der ihr zugeordneten Seite des Rahmens (2) arretierend übergreift. Dadurch wird die Bodenplatte (19) in der in Fig. 2 dargestellten Lage arretiert und kann nach Lösen dieser Arretierung (47, 48) in die in Fig. 2 gestrichelt eingezeichnete Lage ausgeschwenkt werden, soweit es die Schwenkbegrenzung (42, 43) zuläßt.

Wie aus Fig. 10 entnehmbar ist, weist die Bodenplatte in Höhe des Dornes (46) einen Schlitz (49) sowie eine über das freie, spitze Ende (50) des Dornes (46) vorspringende Seitenkante (51) auf, die in arretierter Lage der Bodenplatte (19) die zugeordnete Seitenwand (52) des Rahmens (2) überragt, wie es in Fig. 2 dargestellt ist. Diese vorspringende Seitenkante (51) der Bodenplatte (19) hat zwei Funktionen. Zum einen kann mit ihr in einfacher Weise die Arretierung (47, 48) der Seitenwange (45) durch Ausübung eines Druckes in Richtung auf die ihr zugeordnete Seitenwand (52) des Rahmens (2) gelöst werden; zum anderen untergreift diese vorspringende Seitenkante (51) einen Längsschlitz (55) zwischen den beiden Teil-Kulissensteinen (6, 7), wenn die Bodenplatte (19) gemäß Fig. 2 in ihre gestrichelt eingezeichnete, durch die Schwenkbegrenzung (42, 43) festgelegte Lage ausgeschwenkt wird. In dieser Stellung ist Spitze (50) des Dornes (46) aus dem Längsschlitz (55) zwischen den Teil-Kulissensteinen (6, 7) zurückgezogen, so daß die Enden (53, 54) des Matrizenbandes (18) von oben her (s. Fig. 7) in den Schlitz (55) bis zum Anschlag mit der vorspringenden Seitenkante (51) der Bodenplatte (19) eingesetzt und sodann die Bodenplatte (19) aus der in Fig. 2 gestrichelt dargestellten Lage in die durchgezeichnete Lage in Richtung des Pfeiles (56) gedrückt werden kann, bis die Endposition gemäß Fig. 6 erreicht ist. Dabei perforiert das spitze Ende (50) des Dornes (46) die beiden Enden (53, 54) des Matrizenbandes (18) und bildet für diese ein Schwenkgelenk, so daß nach Belieben die Schlaufe (17) des Matrizenbandes (18) durch den engen Einsatzschlitz (13) des Teil-Kulissensteines (6) in den Einsatzschlitz (14) des Teil-Kulissensteines (7) in den Führungsschlitz (16) eingesetzt werden kann. Zu diesem Umsetzen des Matrizenbandes (18) braucht somit nicht mehr wie beim Stand der Technik eine Verklemmung gelöst werden, da nunmehr der Dorn (46) als Schwenkgelenk des Matrizenbandes (18) fungiert. Damit werden auch die bisherigen Beschädigungen des Matrizenbandes (18) beim Umsetzen unterbunden.

Das vorbeschriebene Ein- und Ausschwenken der Bodenplatte (19) wird nachfolgend noch einmal an Hand der Schnittzeichnungen der Figuren 6 und 7 beschrieben, worin mit den Figuren 1 und 2 sowie 8 bis 10 übereinstimmende Bezeichnungen mit gleichen Bezugsziffern bezeichnet sind. Man sieht aus Fig. 6 deutlich, daß in eingeschwenkter und arretierter Lage der Bodenplatte (19) der Dorn (46) die Enden (53, 54) des Matrizenbandes (18) im Schlitz (55) zwischen den beiden Teil-Kulissensteinen (6, 7) schwenkbeweglich hält.

Aus Fig. 7 ist ersichtlich, daß die Enden (53, 54) beim Einführen in den Schlitz (55) gegen die als Anschlag fungierende Seitenkante (51) stoßen, die den Schlitz (55) an dieser Stelle abdeckend untergreift. An Hand beider Figuren 6 und 7 ist außerdem erkennbar, daß der Schlitz (49) der Bodenplatte (19) in deren Schließlage gemäß Fig. 6 sich fluchtend unterhalb des Schlitzes (55) zwischen den Teil-Kulissensteinen (6, 7) befindet.

Damit die Teil-Kulissensteine (6, 7) trotz des ihre Verschiebebahn kreuzenden Dornes (46) von der Gewindestange (3) in beiden Richtungen des Doppelpfeiles (57) von Fig. 1 verschoben werden können, sind sie jeweils mit einem parallel zur Längsachse (40) der Gewindestange (3) verlaufenden Langloch (58) versehen.

Der neue Matrizenspanner (1) wird wie folgt gehandhabt:

In der aus den Figuren 1, 2 und 7 ersichtlichen Lage werden bei ausgeschwenkter Bodenplatte (19) die Enden (53, 54) des Matrizenbandes (18) von oben her in den Schlitz (55), in der aus Fig. 7 ersichtlichen Schnittansicht, so weit eingeschoben, bis sie gegen die als Anschlag fungierende Seitenkante (51) der Bodenplatte (19) stoßen. Hiernach wird die Bodenplatte (19) durch Ausübung eines Druckes gegen die Seitenwange (45) in Richtung des Pfeiles (56) von Fig. 2 in ihre arretierte Lage verschoben. Dadurch schwenkt der kreisbogenförmig konfigurierte Dorn (46) unter Perforation der Enden (53, 54) des Matrizenbandes (18) in seine durchgezeichnete Lage der Fig. 2 ein, die in vergrößerter Schnittansicht aus Fig. 6 entnommen werden kann. Hiernach wird die Schlaufe (17) des Matrizenbandes (18) zwischen zwei Fingern einer Hand, vorzugsweise zwischen Zeigefinger und Daumen, an ihrem Schlaufenende ein wenig zusammengedrückt und wahlweise durch den Einsatzschlitz (13) des Teil-Kulissensteines (6) oder durch den Einsatzschlitz (14) des Teil-Kulissensteines (7) in den darunterliegenden Führungsschlitz (15, 16) geschoben, in welchem sich die Schlaufe (17) nach ihrem Loslassen unter ihrer Eigenelastizität in die aus Fig. 2 ersichtliche Lage aufweitet und damit nicht mehr aus den engen Einsatzschlitzen (13, 14) herausgleiten kann. Bei diesem Vorgang wirkt der Dorn (46) als Schwenkgelenk. In dieser Lage nehmen der Kulissenstein (5) bzw. die Teil-Kulissensteine (6, 7) die aus den Figuren 1 und 2 ersichtlichen Lagen ein.

Nunmehr wird das in dieser Stellung ihre größte Schlaufenweite aufweisende Matrizenband über den zu behandelnden, nicht dargestellten Zahn geschoben. Zur Verengung der Weite der Schlaufe (17) des Matrizenbandes (18) wird sodann gemäß den Figuren 1 und 5 die Schnellspannmutter (23) in der bereits beschriebenen Weise gekippt und in dieser entriegelten Stellung die Gewindestange (3) blitzartig, z.B. mit dem Daumen einer Hand, durchgeschoben, wodurch die Teil-Kulissensteine (6, 7) mit ihren Langlöchern (58) an dem feststehenden Dorn (46) entlanggleiten und dadurch die Weite der Schlaufe (17) des Matrizenbandes (18) blitzartig verengt wird. Sobald spürbarer Widerstand vorhanden ist, wird der Vorsprung (29) der Schnellspannmutter (23) losgelassen, wodurch diese unter Wirkung der Klemmfeder (26) ihre in Fig. 4 dargestellte arretierte Lage einnimmt. Sogleich wird durch Drehung des Rändelgriffes (33) über einen relativ geringen Drehwinkel die Fein-Endstellung der Schlaufe (17) um den betreffenden Zahn eingestellt. Dieser gesamte Vorgang dauert nicht länger als ein bis zwei Sekunden. Beim Stand der Technik waren hierzu, selbst bei äußerst geschickter Handhabung, mindestens sieben bis zehn Sekunden erforderlich.

Dieses Spannen der Schlaufe (17) des Matrizenbandes (18) erfolgt unter Vorspannen der Spannfeder (35).

Um das Matrizenband (18) nach der erfolgten Zahnbehandlung lösen zu können, muß die Schlaufe (17) wieder aufgeweitet werden. Dies geschieht blitzartig dadurch, daß erneut die Schnellspannmutter (23) in der aus den Figuren 1 und 5 ersichtlichen Weise gekippt wird. Dadurch schnellt unter Wirkung der Spannfeder (35) die Gewindestange (3) mit dem Kulissenstein (5) in die aus Fig. 1 ersichtliche Lage zurück, wodurch die Schlaufe (17) zwangsläufig aufgeweitet und von dem behandelten Zahn abgehoben werden kann. Das Auswechsel und das Umsetzen des Matrizenbandes (18) erfolgt jeweils nach Lösen der Arretierung (47, 48) der Bodenplatte (19) in der bereits zu den Figuren 2, 6 und 7 beschriebenen Weise.

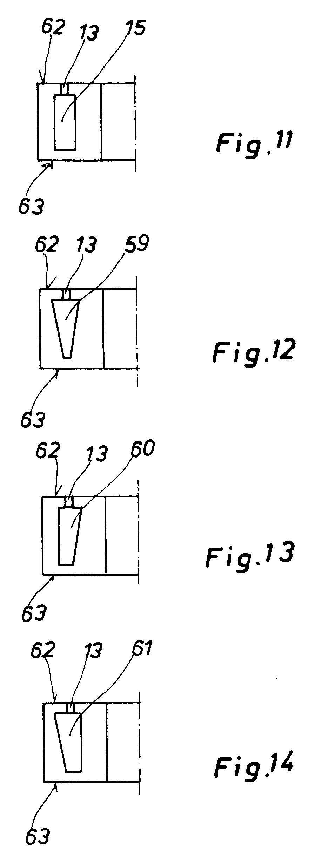

In den Figuren 11 bis 14 sind unterschiedliche Formen des Führungsschlitzes (15, 16) in der Nähe der freien Enden (11, 12) der Teil-Kulissensteine (6, 7) dargestellt.

In Fig. 11 weist der Führungsschlitz (15) die aus den Figuren 1 und 3 ersichtliche Rechteckform auf. Dadurch entsteht eine im wesentlichen zylindrische Schlaufe (17) des Matrizenbandes (18).

In Fig. 12 ist der Führungsschlitz (59) mit einer konischen Form versehen. Aufgrund der Eigenelastizität des Matrizenbandes (18) entsteht dadurch zwangsläufig auch eine konische Form der Schlaufe (17).

In den Figuren 13 und 14 sind jeweils zu verschiedenen Seiten hin keilförmige Führungsschlitze (60, 61) dargestellt. Durch diese Ausbildung entsteht gleichfalls eine konische Teilform der Schlaufe (17). An der Oberseite (62) der Teil-Kulissensteine (6, 7) ist jeweils ein schrägverlaufender und erheblich enger gestalteter Einsatzschlitz (13) bzw. (14) angeordnet. Dieser Einsatzschlitz (13) bzw. (14) kann jedoch - mit Ausnahme der Ausführung der Fig. 12 - auch an der Unterseite (63) der Teil-Kulissensteine (6, 7) angeordnet werden.

B e z u g s z e i c h e n l i s t e :

| | |
|---|---|
| Matrizenspanner | 1 |
| rohrförmiger Rahmen | 2 |
| Gewindestange | 3 |
| vorderes Ende der Gewindestange 3 | 4 |
| zweiteiliger Kulissenstein | 5 |
| Teil-Kulissensteine des Kulissensteines 5 | 6, 7 |
| Kugel | 8 |
| Ausnehmungen | 9 |
| Vorderkante des Rahmens 2 | 10 |
| Enden der Teil-Kulissensteine 6, 7 | 11, 12 |
| Einsatzschlitze | 13, 14 |
| Führungsschlitze | 15, 16 |
| verstellbare Schlaufe | 17 |
| Matrizenband | 18 |
| Bodenplatte | 19 |

| | |
|---|---|
| Schwenkbolzen | 20 |
| hinteres Ende der Gewindestange 3 | 21 |
| Außengewinde | 22 |
| Schnellspannmutter | 23 |
| Öffnung der Schnellspannmutter 23 | 24 |
| Innengewinde | 25 |
| Klemmfeder | 26 |
| Stirnfläche der Schnellspannmutter 23 | 27 |
| bügelförmiger Vorsprung | 28 |
| Vorsprung an der Schnellspannmutter 23 | 29 |
| Halteelement | 30 |
| Kantenbereiche | 31, 32 |
| Rändelgriff | 33 |
| Scheibe | 34 |
| Pfeile | 37, 56 |

| | |
|---|---|
| gewindelose Flächen | 38 |
| Doppelpfeile | 39, 57 |
| Längsachse der Gewindestange 3 | 40 |
| Durchgrifföffnung | 41 |
| radialer Schlitz | 42 |
| Schraubbolzen | 43 |
| Seitenkante der Bodenplatte 19 | 44 |
| Seitenwange der Bodenplatte 19 | 45 |
| Dorn | 46 |
| Rastnase | 47 |
| Rastfläche | 48 |
| Schlitz der Bodenplatte 19 | 49 |
| freies, spitzes Ende | 50 |
| Seitenkante der Bodenplatte 19 | 51 |
| Seitenwand | 52 |
| Enden des Matrizenbandes 18 | 53, 54 |
| Längsschlitz zwischen den Teil-Kulissensteinen 6, 7 | 55 |

| | |
|---|---|
| Langlöcher in den Teil-Kulissensteinen 6, 7 | 58 |
| Führungsschlitze an den Enden 11, 12 | 59, 60, 61 |
| Oberseite der Teil-Kulissensteine 6, 7 | 62 |
| Unterseite der Teil-Kulissensteine 6, 7 | 63 |

**Patentansprüche**

1. Matrizenspanner (1) für Dentalzwecke mit einer an einem Rahmen (2) schraubverschieblichen Gewindestange (3), die mit ihrem vorderen Ende (4) einen die Enden eines Matrizenbandes (18) lösbar halternden Kulissenstein (5) entlang dem Rahmen (2) gleitend verschiebt, wobei das Matrizenband (18) in Form einer in ihrer Weite verstellbaren Schlaufe (17) durch einen Führungsschlitz hindurchgreift und wobei die Gewindestange (3) mit ihrem hinteren, mit einem Außengewinde versehenen Ende (21) durch eine Öffnung (24) mit entsprechendem Innengewinde (25) eines am Rahmen (2) gehaltenen Schraubelementes (23) hindurchgeführt und an diesem hinteren Ende (21) mit einem Rändelgriff (33) versehen ist, **dadurch gekennzeichnet,** daß das Schraubelement als eine zur Längsachse (40) der Gewindestange (3) kippbare Schnellspannmutter (23) ausgebildet ist, die unter Wirkung einer sie in Klemmlage mit der Gewindestange (3) haltenden Klemmfeder (26) steht und daß mindestens ein Führungsschlitz (15, 16) für die in ihrer Weite verstellbare Schlaufe (17) des Matrizenbandes (18) am freien Ende (11, 12) des Kulissensteines (5) angeordnet ist.

2. Matrizenspanner nach Anspruch 1, **dadurch gekennzeichnet,** daß sich die Klemmfeder (26) mit ihrem einen Ende gegen eine Stirnfläche (27) der die Gewindestange (3) konzentrisch umgreifenden Schnellspannmutter (23) und mit ihrem anderen Ende an einem ortsfesten Vorsprung (28) des Rahmens (2) abstützt.

3. Matrizenspanner nach Anspruch 1 oder 2, **dadurch gekennzeichnet,** daß die Klemmfeder (26) als die Gewindestange (3) konzentrisch umgreifende Schrauben- oder Kegelfeder ausgebildet ist.

4. Matrizenspanner nach Anspruch 1 oder 2, **dadurch gekennzeichnet,** daß die Klemmfeder (26) als Teller- oder Blattfeder ausgebildet ist.

5. Matrizenspanner nach einem der Ansprüche 1 bis 4, **dadurch gekennzeichnet,** daß die Schnellspannmutter (23) mit einem ergonomisch günstigen, über die Außenkontur des Rahmens (2) hinausragenden Vorsprung (29) versehen ist.

6. Matrizenspanner nach einem der Ansprüche 1 bis 5, **dadurch gekennzeichnet,** daß der Rahmen (2) in Höhe des Vorsprunges (29) der Schnellspannmutter (23) ein ergonomisch günstig vorspringendes Halteelement (30) aufweist.

7. Matrizenspanner nach einem der Ansprüche 1 bis 6, **dadurch gekennzeichnet,** daß das Halteelement (30) und der Vorsprung (29) der Schnellspannmutter (23) einen abgerundeten Kantenbereich (32, 31) aufweisen und in Verbindung mit dem Rändelgriff (33) nach der Art einer Injektionsspritze ausgebildet sind.

8. Matrizenspanner nach einem der Ansprüche 1 bis 7, **dadurch gekennzeichnet,** daß die Führungsschlitze eine konische (59), keilförmige (60, 61) oder zylindrische (14, 15) Form aufweisen und an der Ober- (62) und/oder der Unterseite (63) des Kulissensteines (5) mit einem engeren Einsatzschlitz (13, 14) versehen sind.

9. Matrizenspanner nach einem der Ansprüche 1 bis 8, **dadurch gekennzeichnet,** daß der Kulissenstein (5) einteilig oder mehrteilig (6, 7) ausgebildet ist und in jedem Fall einen axialsymmetrischen, etwa in axialer Richtung der Längsachse (40) der Gewindestange (3) verlaufenden Längsschlitz (55) zum Einsatz des lösbar gehalterten Matrizenbandes (18) aufweist.

10. Matrizenspanner nach einem der Ansprüche 1 bis 9, **dadurch gekennzeichnet,** daß die Enden (53, 54) des Matrtzenbandes (18) durch einen durch sie hindurchgreifenden sowie am Rahmen (2) arretierbaren Dorn (46) in dem Längsschlitz (55) schwenkbar zu haltern sind.

11. Matrizenspanner nach einem der Ansprüche 1 bis 10, **dadurch gekennzeichnet,** daß der Dorn (46) an einer Seitenwange (45) einer an der Unterseite des Rahmens (2) schwenkbar gelagerten Bodenplatte (19) befestigt ist, die über eine Rastnase (47) an einer entsprechenden Rastfläche (48) am Rahmen (2) vorübergehend arretierbar ist.

12. Matrizenspanner nach einem der Ansprüche 1 bis 11, **dadurch gekennzeichnet,** daß die Bodenplatte (19) in einem Abstand von der Schwenkachse (20) einen radialen Schlitz (42) aufweist, durch welchen ein am Rahmen (2) befestigter Niet- oder Schraubenbolzen (43) als Schwenkbegrenzung hindurchgreift.

13. Matrizenspanner nach einem der Ansprüche 1 bis 12, **dadurch gekennzeichnet,** daß der Kulissenstein (5) für den Durchgriff des Dornes (46) ein parallel zur Längsachse (40) der Gewindestange (3) verlaufendes Langloch (58) aufweist und an seinem der Gewindestange (3) zugekehrten Ende mit dieser über eine Kugel (8) formschlüssig verschieblich gekoppelt ist.

14. Matrizenspanner nach einem der Ansprüche 1 bis 13, **dadurch gekennzeichnet,** daß die Bodenplatte (19) an der den Dorn (46) haltenden Seitenwange (45) gegenüberliegenden Seite eine über das freie, spitze Ende (50) des Dornes (46) vorspringende Seitenkante (51) aufweist, die in arretierter Lage der Bodenplatte (19) die zugeordnete Seitenwand (52) des Rahmens (2) überragt.

15. Matrizenspanner nach einem der Ansprüche 1 bis 14, **dadurch gekennzeichnet,** daß der Kulissenstein (5) zweiteilig ausgebildet ist und in einem im Querschnitt rohrförmigen Rahmen (2) verschieblich ist.

16. Matrizenspanner nach einem der Ansprüche 1 bis 15, **dadurch gekennzeichnet,** daß der Kulissenstein (5) aus zwei quaderförmigen Teil-Kulissensteinen (6, 7) besteht, die in einem Rahmen (2) mit rechteckigem oder quadratischem Querschnitt geführt sind.

17. Matrizenspanner nach einem der Ansprüche 1 bis 16, **dadurch gekennzeichnet,** daß der Kulissenstein (5) entgegen der Kraft einer Spannfeder (35) in eine vordere, die Schlaufe (17) des Matrizenbandes (18) verengende Position vorschiebbar ist.

18. Matrizenspanner nach einem der Ansprüche 1 bis 17, **dadurch gekennzeichnet,** daß die Spannfeder (35) aus einer die Gewindestange (3) konzentrisch umgreifenden, zylindrischen Schraubenfeder besteht, die sich mit ihrem einen Ende gegen eine drehfest mit der Gewindestange (3) verbundene Scheibe (34) und mit ihrem anderen Ende gegen einen ortsfesten Vorsprung (36) des Rahmens (2) abstützt.

19. Matrizenspanner nach einem der Ansprüche 1 bis 18, **dadurch gekennzeichnet,** daß das Matrizenband (18) aus korrosionsfestem Metall oder Kunststoff besteht und entweder als Einzelstück oder als Bandware ausgebildet ist.

**Claims**

1. Die stretcher (1) for dental purposes having a threaded rod (3) which is displaceable on a frame (2) by means of a screw and which displaces in a sliding manner with its front end (4) a sliding block (5) which releasably retains the ends of a die band (18), wherein the die band (18) in the form of a loop (17) which is adjustable in width penetrates a guide slit and wherein the threaded rod (3) is guided with its rear end (21) provided with an external thread through an opening (24) with a corresponding internal thread (25) of a screw element (23) held on the frame (2) and a knurled grip (33) is provided at this rear end (21), characterised in that the screw element is formed as a quick-action adjusting nut (23) which can be tilted to the longitudinal axis (40) of the threaded rod (3), the quick-action adjusting nut (23) being influenced by a clamping spring (26) holding the quick-action adjusting nut (23) in a clamped position with the threaded rod (3) and that at least one guide slit (15, 16) for the loop (17) of the die band (18) which is adjustable in its width is disposed at the free end (11, 12) of the sliding block (5).

2. Die stretcher according to claim 1, characterised in that the clamping spring (26) is supported with one end against a front face (27) of the quick-action adjusting nut (23) which encompasses the threaded rod (3) in a concentric manner and is supported with its other end on a fixed projection (28) of the frame (2).

3. Die stretcher according to claims 1 or 2, characterised in that the clamping spring (26) is formed as a helical spring or a conical spring which encompasses the threaded rod (3) in a concentric manner.

4. Die stretcher according to claims 1 or 2, characterised in that the clamping spring (26) is designed as a plate spring or a leaf spring.

5. Die stretcher according to one of claims 1 to 4, characterised in that the quick-action adjusting nut (23) is provided with an ergonomic-friendly projection (29) which protrudes beyond the external contour of the frame (2).

6. Die stretcher according to one of claims 1 to 5, characterised in that the frame (2) comprises an ergonomically-friendly protruding retaining element (30) at the level of the projection (29) of the quick-action adjusting nut (23).

7. Die stretcher according to one of claims 1 to 6, characterised in that the retaining element (30) and the projection (29) of the quick-action adjusting nut (23) comprise a rounded edge region (32, 33) and are formed in conjunction with the knurled grip (33) as a type of injection syringe.

8. Die stretcher according to one of claims 1 to 7, characterised in that the guide slits comprise a conical (59), wedge-shape (60, 61) or cylindrical (14, 15) form and are provided at the upper side (62) and/or lower side (63) of the sliding block (5) with a narrow application slit (13, 14).

9. Die stretcher according to one of claims 1 to 8, characterised in that the sliding block (5) is formed as one piece or more than one piece (6, 7) and in each case comprises an axially symmetrical longitudinal slit (55) extending approximately in the axial direction of the longitudinal axis (40) of the threaded bar (3) for the purpose of applying the releasably held die band (18).

10. Die stretcher according to one of claims 1 to 9, characterised in that the ends (53, 54) of the die band (18) are to be pivotably held in the longitudinal slit (55) by means of a mandrel (46) which penetrates the ends of the die band (18) and can also be stopped at the frame (2).

11. Die stretcher according to one of claims 1 to 10, characterised in that the mandrel (46) is attached to a lateral face (45) of a base plate (19) pivotably mounted on the lower side of the frame (2) and the said base plate (19) can be temporarily stopped by way of a latch (47) against a corresponding latch surface (48) on the frame (2).

12. Die stretcher according to one of claims 1 to 11, characterised in that the base plate (19) comprises a radial slit (42) at a distance from the pivot axis (20) and a rivet pin or a screw pin (43) attached to the frame (2) penetrates the radial slit (42) in order to provide a pivot limit stop.

13. Die stretcher according to one of claims 1 to 12, characterised in that the sliding block (5) comprises a elongated hole (58) which extends parallel to the longitudinal axis (40) of the threaded bar (3) to enable the mandrel (46) to pass through and the sliding block is coupled at its end facing the threaded rod (3) to the threaded rod (3) by way of a sphere (8) in a positive manner and so as to be able to move.

14. Die stretcher according to one of claims 1 to 13, characterised in that the base plate (19) comprises at the side lying opposite the lateral face (45) retaining the mandrel (46) a lateral edge (51) protruding beyond the free, pointed end (50) of the mandrel (46) and the lateral edge (51) in the stopped position of the base plate (19) protrudes beyond the associated lateral wall (52) of the frame (2).

15. Die stretcher according to one of claims 1 to 14, characterised in that the sliding block (5) is formed in two parts and is displaceable in a frame (2) which has a tubular cross section.

16. Die stretcher according to one of claims 1 to 15, characterised in that the sliding block (5) has two cuboid partial sliding blocks (6, 7), which are guided in a frame (2) having a rectangular or square cross section.

17. Die stretcher according to one of claims 1 to 16, characterised in that the sliding block (5) can be moved forward against the force of a tension spring (35) into a front position which reduces the width of the loop (17) of the die band (18).

18. Die stretcher according to one of claims 1 to 17, characterised in that the tension spring (35) comprises a cylindrical helical spring which encompasses the threaded rod (3) in a concentric manner and the helical spring (35) is supported by one end against a disk (34) non-rotatably connected to the threaded rod (3) and by the other end against a fixed projection (36) of the frame (2).

19. Die stretcher according to one of claims 1 to 18, characterised in that the die band (18) comprises non-corrosive metal or synthetic material and is formed either as individual pieces or as tape goods.

**Revendications**

1. Dispositif de serrage d'une matrice dentaire (1), comportant une tige filetée (3) qui est déplaçable par vissage le long d'un cadre (2) et dont l'extrémité avant (4) déplace le long du cadre un coulisseau (5) maintenant de façon amovible les extrémités d'une bande de matrice (18), ladite bande de matrice (18) traversant une fente de guidage en formant une boucle de dimension variable (17), la tige filetée (3) traversant avec son extrémité arrière filetée sur la face extérieure (21) une ouverture (24) munie d'un taraudage correspondant (25), pratiquée dans un élément fileté (23) fixé au cadre (2), et étant équipée à cette extrémité arrière (21) d'une tête moletée (33),
   caractérisé en ce que l'élément fileté consiste en un écrou à serrage rapide (23) inclinable par rapport à l'axe longitudinal (4) de la tige filetée (3), et sous l'effet d'un ressort de coinçage (26) qui le maintient en position avec la tige filetée (3), et en ce qu'au moins une fente de guidage (15, 16) est agencée à l'extrémité libre (11, 12) du coulisseau (4) pour la boucle de dimension variable (17) de la bande de matrice (18).

2. Dispositif de serrage d'une matrice selon la revendication 1,
   caractérisé en ce que le ressort de coinçage (26) prend appui avec une extrémité contre une face frontale (27) de l'écrou à serrage rapide (23) qui entoure la tige filetée (3) de manière concentrique et, avec son autre extrémité, contre une saillie (28) fixe du cadre (2).

3. Dispositif de serrage d'une matrice selon la revendication 1 ou 2,
   caractérisé en ce que le ressort de coinçage (26) consiste en un ressort hélicoïdal ou conique entourant la tige filetée (3) de manière concentrique.

4. Dispositif de serrage d'une matrice selon la revendication 1 ou 2,
   caractérisé en ce que le ressort de coinçage (26) consiste en un ressort à disques ou à lamelles.

5. Dispositif de serrage d'une matrice selon l'une des revendications 1 à 4,
   caractérisé en ce que l'écrou de serrage rapide (23) est muni d'une saillie (29) sur le contour extérieur du cadre (2) qui présente une forme ergonomiquement avantageuse.

6. Dispositif de serrage d'une matrice selon l'une des revendications 1 à 5, caractérisé en ce que le cadre comporte, à hauteur de la saillie (29) de l'écrou à serrage rapide (23), un élément de poignée (30) en saillie de forme ergonomiquement avantageuse.

7. Dispositif de serrage d'une matrice selon l'une des revendications 1 à 6,
caractérisé en ce que l'élément de poignée (30) et la saillie (29) de l'écrou à serrage rapide (23) présentent une zone d'arête arrondie (32, 31) et sont agencés avec la tête moletée (33), comme une seringue d'injection.

8. Dispositif de serrage d'une matrice selon l'une des revendications 1 à 7,
caractérisé en ce que les fentes de guidage présentent une forme conique (59), en coin (60, 61) ou cylindrique (14, 15), et sont munies, à la face supérieure (62) et/ou inférieure (63) du coulisseau (5), d'une fente d'admission (13, 14) plus étroite.

9. Dispositif de serrage d'une matrice selon l'une des revendications 1 à 8,
caractérisé en ce que le coulisseau est constitué d'une seule pièce ou de plusieurs pièces (6, 7) et présente certainement une fente longitudinale (55) symétrique par rapport à l'axe et s'étendant en direction axiale de l'axe longitudinal (40) de la tige filetée (3), en vue de l'utilisation de la bande de matrice (18) amovible (18).

10. Dispositif de serrage d'une matrice selon l'une des revendications 1 à 9,
caractérisé en ce qu'on maintient les extrémités (53, 54) de la bande de matrice (18) à l'aide d'une broche (46) les traversant et fixable au cadre (2), de manière pivotable dans la fente longitudinale (55).

11. Dispositif de serrage d'une matrice selon l'une des revendications 1 à 10,
caractérisé en ce que la broche (46) est fixée à une joue latérale (45) d'une plaque de fond (19) logée de façon pivotable à la face inférieure du cadre (2), la plaque de fond étant temporairement fixable via un ergot d'encliquetage (47) et une surface d'encliquetaqe (47) et une surface d'encliquetage correspondante (48) du cadre (2).

12. Dispositif de serrage d'une matrice selon l'une des revendications 1 à 11,
caractérisé en ce que la plaque de fond (19) comporte une fente radiale (42) à distance de l'axe de pivotement (20), fente radiale traversée par un rivet ou boulon (43) solidaire du cadre (2), à titre de limitation du mouvement de pivotement.

13. Dispositif de serrage d'une matrice selon l'une des revendications 1 à 12,
caractérisé en ce que le coulisseau (5) comporte un trou oblong (58) qui s'étend parallèlement à l'axe longitudinal (40) de la tige filetée, pour le passage de la broche (46), et est accouplé à celle-ci par une bille (8) par adaptation des formes et de façon déplaçable, à son extrémité orientée vers la tige filetée (3).

14. Dispositif de serrage d'une matrice selon l'une des revendications 1 à 13,
caractérisé en ce que la plaque de fond (19) comporte une arête latérale (51) faisant saillie sur l'extrémité pointue libre (50) de la broche (46), du côté opposé à la joue latérale (45) qui porte la broche (46), l'arête latérale (51) faisant saillie, en position fixée de la plaque de fond (19), sur la paroi latérale correspondante (52) du cadre (2).

15. Dispositif de serrage d'une matrice selon l'une des revendications 1 à 14,
caractérisé en ce que le coulisseau (5) est constitué de deux pièces et est déplaçable dans un cadre (2) de section tubulaire.

16. Dispositif de serrage d'une matrice selon l'une des revendications 1 à 15,
caractérisé en ce que le coulisseau (5) se compose de deux éléments de coulisseau (6, 7) parallélipipédiques qui sont guidés dans un cadre (2) de section rectangulaire ou carrée.

**17.** Dispositif de serrage d'une matrice selon l'une des revendications 1 à 16, caractérisé en ce que le coulisseau (5) est avançable contre l'effet d'un ressort de rappel (25) en une position avancée rétrécissant la boucle (17) de la bande de matrice (18).

**18.** Dispositif de serrage d'une matrice selon l'une des revendications 1 à 17, caractérisé en ce que le ressort de rappel (35) consiste en un ressort cylindrique hélicoïdal entourant concentriquement la tige filetée (3), qui prend appui avec une extrémité contre un disque (39) monté sur la tige filetée de manière fixe en rotation et, avec l'autre extrémité, contre une saillie fixe (36) du cadre (2).

**19.** Dispositif de serrage d'une matrice selon l'une des revendications 1 à 18, caractérisé en ce que la bande de matrice (18) consiste en un matériau métallique ou synthétique résistant à la corrosion et se présente sous forme d'élément unitaire ou en tant que matériau en bande.

III

Fig.1

16 46 10 57 58 5 8 36 4 2 3 28 26 27 23 32 30 22 33

II

II

13 6 55

11 43 19 9 20 35 34 25 29 24 21 IV

12 14 7 1 31

Fig.3

VI 56

15 6 8 3 35 34 26 23 33

17

18

16 51 7 9 1

7 55 48 VI

52 1

Fig.2

53

52

EP 0 336 017 B1

17

## Fig.4

## Fig.5

## Fig.6

## Fig.7

Fig.8

Fig.9

Fig.10

Fig.11

Fig.12

Fig.13

Fig.14

20